# EUROPÄISCHE PATENTSCHRIFT

(11) **EP 0 809 053 B1**
(45) Veröffentlichungstag und Bekanntmachung des Hinweises auf die Patenterteilung: **17.10.2001**
(21) Anmeldenummer: 96119916.3
(22) Anmeldetag: 12.12.1996
(51) Int. Cl.: F16J 15/38

(54) **Gleitringdichtung**
Mechanical face seal
Garniture mécanique d'étanchéité

(30) Priorität: 24.05.1996 DE 19620950
(43) Veröffentlichungstag der Anmeldung: 26.11.1997
(73) Patentinhaber: Firma Carl Freudenberg, 69469 Weinheim (DE)
(72) Erfinder: Reinhold, Kraus, 69509 Mörlenbach (DE)

(56) Entgegenhaltungen:
- EP-A- 0 236 541
- DE-A- 1 809 620
- US-A- 3 218 085
- US-A- 3 312 476

## Beschreibung

### Technisches Gebiet

Die Erfindung betrifft eine Gleitringdichtung.

### Stand der Technik

Aus der US-A-3,218,085 ist eine Gleitringdichtung bekannt, umfassend einen Gegenring und einen als Widerlager ausgebildeten Stellring, die relativ unverdrehbar miteinander verbunden sind. Der Gegenring und der Stellring sind gegeneinander durch jeweils zumindest einen Dichtring aus elastomerem Werkstoff abgedichtet. Der Gleitring, der relativ unverdrehbar und in axialer Richtung federnd mit einer Welle verbunden ist, ist gegenüber der Welle durch einen weiteren Dichtring abgedichtet, wobei der Gegenring und der Gleitring Dichtflächen aufweisen, die einander unter elastischer Vorspannung dichtend berühren. Der Dichtring sowie der weitere Dichtring sind in jeweils einem durch Gegenring und Stellring sowie Gleitring und Welle gebildeten Einbauraum unter elastischer Vorspannung dichtend angeordnet. Der weitere Dichtring ist - im Längsschnitt betrachtet - im wesentlichen sichelförmig ausgebildet und auf der den Dichtflächen von Gegenring und Gleitring zugewandten Seite von einer Begrenzungswandung des Einbauraums flächig anliegend berührt. Auf der den Dichtflächen von Gegenring und Gleitring abgewandten Seite ist der weitere Dichtring von einer Stützfläche eines Stützkörpers unter elastischer Vorspannung anliegend berührt, wobei - durch die sichelförmige Gestalt - nur die beiden umfangsseitigen Begrenzungen des weiteren Dichtrings die Stützfläche unter elastischer Vorspannung anliegend berühren; der Bereich zwischen den umfangsseitigen Begrenzungen ist der Stützfläche des Stützkörpers mit axialem Abstand benachbart zugeordnet. Der elastomere Werkstoff, aus dem die Dichtringe bestehen, ist permeabel. In Abhängigkeit von der Höhe des abzudichtenden Drucks dringt mehr oder weniger abzudichtendes Medium in das Dichtungsmaterial ein. Erfolgt ein plötzlicher Druckabfall in der Umgebung des Dichtrings, dehnt sich das in den Dichtring eingedrungene Medium schlagartig aus und beschädigt / zerstört dabei den Dichtring. Einen solchen Vorgang nennt man explosive Dekompression.

### Darstellung der Erfindung

Der Erfindung liegt die Aufgabe zugrunde, eine Gleitringdichtungen der vorbekannten Art derart weiterzuentwickeln, dass nahezu der gesamte O-Ring einer gleichmäßigen Druckvorspannung ausgesetzt ist und dadurch eine Zerstörung des Rings durch eine explosive Dekompression von Medien, die in den O-Ring eingedrungen sind, bei plötzlichem Druckabfall in der Umgebung - unabhängig vom Werkstoff der Dichtringe - zuverlässig ausgeschlossen ist.

Diese Aufgabe wird erfindungsgemäß mit den Merkmalen von Anspruch 1 gelöst, auf vorteilhafte Ausgestaltungen nehmen die Unteransprüche Bezug.

Zur Lösung der Aufgabe ist eine Gleitringdichtung vorgesehen, umfassend einen Gegenring und einen als Widerlager ausgebildeten Stellring, die relativ unverdrehbar miteinander verbunden sind und eine abzudichtende Welle relativ unverdrehbar umschließen und gegeneinander und gegenüber der Welle durch jeweils zumindest einen Dichtring aus elastomerem Werkstoff abgedichtet sind sowie einen Gleitring, der relativ unverdrehbar und in axialer Richtung federnd mit einem Gehäuse verbunden und demgegenüber durch zumindest einen O-Ring abgedichtet ist, wobei der Gegenring und der Gleitring Dichtflächen aufweisen, die einander unter elastischer Vorspannung dichtend berühren und wobei der Dichtring sowie der O-Ring in jeweils einem durch Gegenring und Stellring sowie Gleitring und Gehäuse gebildeten Einbauraum unter elastischer Vorspannung dichtend angeordnet sind, wobei im wesentlichen die gesamte Oberfläche von zumindest dem O-Ring von den Begrenzungswandungen des jeweiligen Einbauraums und einer Stützfläche zumindest eines im jeweiligen Einbauraum angeordneten Stützkörpers unter elastischer Vorspannung anliegend berührt ist und wobei der Stützkörper auf der dem O-Ring zugewandten Seite eine an die Gestalt des O-Rings angepasste, kongruent gestaltete Oberflächenform aufweist. Dadurch, dass der nahezu gesamte O-Ring, der aus einem inkompressiblen Werkstoff besteht, einer gleichmäßigen Druck-Vorspannung ausgesetzt ist, erfolgt auch dann keine explosive Dekompression von im O-Ring befindlichen, abzudichtenden Medien, wenn der Druck in der Umgebung des O-Rings schnell abfällt. Trotz des schnellen Druckabfalls in der Umgebung des O-Rings dehnt sich das in den O-Ring eingedrungene, abzudichtende Medium nur langsam aus und entweicht allmählich aus dem O-Ring, bis der Druck in der Umgebung und innerhalb des O-Rings ausgeglichen ist.

Die Druck-Vorspannung, die auf den O-Ring wirkt, ist derart bemessen, dass der O-Ring unter allen Betriebsbedingungen unter allseitiger Druck-Vorspannung im Einbauraum angeordnet ist, so daß eine Zerstörung des O-rings durch explosive Dekompression in jedem Fall sicher ausgeschlossen ist. Das aus dem O-ring entweichende Medium wird über die Passungen des Stützkörpers im Einbauraum abgeblasen. Der Einbauraum mit seinen Begrenzungswandungen und der Stützfläche des Stützkörpers bildet eine Kammerung für den O-ring, wobei die Oberfläche des Stützrings nur deshalb nicht vollständig anliegend berührt ist, weil der Stützkörper innerhalb des Einbauraums hin- und herbewegbar sein muß. Konstruktionsbedingt sind nur sehr kleine Teilbereiche der Oberfläche nicht anliegend berührt.

Der Stützkörper kann durch eine Feder im Einbauraum abgestützt sein, wobei die Feder bevorzugt als Schraubendruckfeder ausgebildet ist. Durch den Einsatz entsprechender Federn kann die Vorspannung auf den O-ring den jeweiligen Gegebenheiten des Anwendungsfalles problemlos angepaßt werden. Schraubendruckfedern aus einem rostfreien metallischen Werkstoff sind in einer Vielzahl von Abmessungen kostengünstig verfügbar, so daß die beanspruchte Gleitringdichtung insgesamt in wirtschaftlicher Hinsicht kostengünstig herstellbar ist. Die Feder hat eine Doppelfunktion. Sie bewirkt nicht nur die elastische Vorspannung innerhalb des Dichtrings, um bei schnellem Druckabfall in der Umgebung dessen Zerstörung zu vermeiden, sondern die Feder stützt gleichzeitig den Gleitring und das Gehäuse in axialer Richtung federnd aufeinander ab und sorgt dadurch für eine elastische axiale Anpressung der Dichtflächen von Gegenring und Gleitring aneinander.

Der Stützkörper ist bevorzugt separat erzeugt und besteht aus einem zähharten Werkstoff. Die durch den Gegenring und den Stellring sowie den Gleitring und das Gehäuse gebildeten Einbauräume sind bevorzugt nutförmig ausgebildet, wobei eine der Begrenzungswandungen der Nut durch die dem O-ring zugewandten Seite des Stützkörpers gebildet ist, die eine an die Gestalt des O-rings angepaßte, kongruent gestaltete Oberflächenform aufweist.

Die O-ringe sind bevorzugt als inkompressible O-Ringe ausgebildet und weisen eine Härte Shore A zwischen 50 und 90 auf. Der Gegenring und der Gleitring bestehen bevorzugt aus einem verschleißfesten Sinterwerkstoff, um den betriebsbedingten abrasiven Verschleiß im Bereich der Dichtflächen auf ein Minimum zu begrenzen.

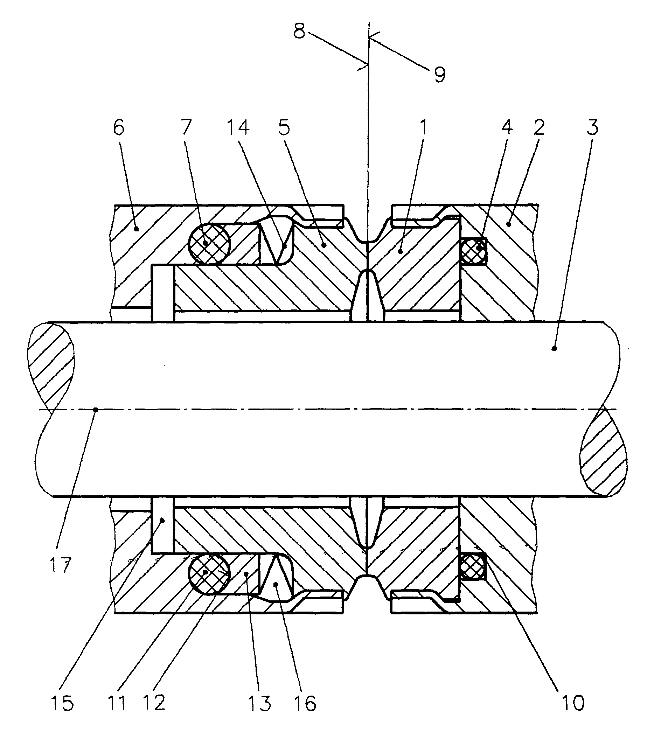

### Kurbeschreibung der Zeichnung

Ein Ausführungsbeispiel der erfindungsgemäßen Gleitringdichtung ist in der Zeichnung schematisch dargestellt und wird nachfolgend näher erläutert:

### Ausführung der Erfindung

Die gezeigte Gleitringdichtung besteht im wesentlichen aus dem Gegenring 1 und dem Gleitring 5, die im Bereich ihrer Dichtflächen 8, 9 unter axialer Vorspannung federnd und dichtend aneinander anliegen. Zwischen den Dichtflächen 8, 9 findet eine umfangsgerichtete Relativbewegung statt, wobei in diesem Ausführungsbeispiel der Gegenring 1 drehfest mit dem als Widerlager ausgebildeten Stellring 2 verbunden ist und der Stellring 2 relativ unverdrehbar mit der Welle 3 verbunden ist. Während der bestimmungsgemäßen Verwendung der Gleitringdichtung rotieren die Welle 3, der Stellring 2 und der Gegenring 1 gemeinsam um die Rotationsachse 17.

Der Gleitring 5 ist drehfest und in axialer Richtung federnd mit dem Gehäuse 6 verbunden. Der Gleitring 5 sowie der Gegenring 1 bestehen in diesem Ausführungsbeispiel zur Verbesserung der Gebrauchseigenschaften während einer langen Gebrauchsdauer jeweils aus einem Sinterwerkstoff.

Die beiden gegeneinander abzudichtenden Räume sind in der Zeichnung mit den Bezugszeichen 15 und 16 bezeichnet.

Zur Funktion der Gleitringdichtung wird folgendes ausgeführt:

Die beiden O-Ringe 4, 7 bestehen jeweils aus elastomerem Werkstoff, wobei der O-Ring 7 beispielsweise aus einem kostengünstigen Butyl-Werkstoff besteht. Die Gasdurchlässigkeitsrate eines solchen Werkstoffs ist nur sehr gering.

Bei schnellem Druckabfall in einem der Räume 15, 16 wird das im O-Ring 7 komprimierte abzudichtende Medium versuchen, ebenfalls plötzlich in Richtung des Raums 15, 16 mit vergleichsweisen geringerem Druck zu entweichen. Um einer explosiven Dekompression des eingeschlossenen Mediums und einer daraus resultierenden Zerstörung des O-Rings 7 vorzubeugen, ist dieser unter einen elastischen Druck-Vorspannung im Einbauraum 11 angeordnet, wobei im wesentlichen die gesamte Oberfläche von der Begrenzungswandung des Einbauraums 11 und der Stützfläche 12 des Stützkörpers 13 anliegend berührt ist.

Durch den den O-Ring 7 unter Vorspannung berührenden Stützkörper 13 ergibt sich nur eine langsame, allmähliche Druckabsenkung innerhalb des O-Rings 7. Trotz eines schnellen Druckabfalls in einem der Räume 16, 16 wird durch die erfindungsgemäße Ausgestaltung eine Zerstörung des O-Rings 7 zuverlässig ausgeschlossen.

Die Feder 14 wird einerseits genutzt, um den Gleitring 5 in axialer Richtung federnd am Gehäuse 6 und am Gegenring 1 abzustützen und andererseits, um den Stützkörper 13 mit seiner Stützfläche 12 an die Oberfläche des O-Rings 7 anzudrücken.

## Patentansprüche

1. Gleitringdichtung, umfassend einen Gegenring (1) und einen als Widerlager ausgebildeten Stellring (2), die relativ unverdrehbar miteinander verbunden sind und eine abzudichtende Welle (3) relativ unverdrehbar umschließen und gegeneinander und gegenüber der Welle (3) durch jeweils zumindest einen Dichtring (4) aus elastomerem Werkstoff abgedichtet sind sowie einen Gleitring (5), der relativ unverdrehbar und in axialer Richtung federnd mit einem Gehäuse (6) verbunden und demgegenüber durch zumindest einen O-Ring (7) abgedichtet ist, wobei der Gegenring (1) und der Gleitring (5) Dichtflächen (8, 9) aufweisen, die einander unter elastischer Vorspannung dichtend berühren und wobei der Dichtring (4) sowie der O-Ring (7) in jeweils einem durch Gegenring (1) und Stellring (2) sowie Gleitring (5) und Gehäuse (6) gebildeten Einbauraum (10, 11) unter elastischer Vorspannung dichtend angeordnet sind, wobei im wesentlichen die gesamte Oberfläche von zumindest dem O-Ring (7) von den Begrenzungswandungen des jeweiligen Einbauraums (11) und einer Stützfläche (12) zumindest eines im jeweiligen Einbauraum (11) angeordneten Stützkörpers (13) unter elastischer Vorspannung anliegend berührt ist, **dadurch gekennzeichnet, daß** der Stützkörper (13) auf der dem O-Ring (7) zugewandten Seite eine an die Gestalt des O-Rings (7) angepasste, kongruent gestaltete Oberflächenform aufweist.

2. Gleitringdichtung nach Anspruch 1, **dadurch gekennzeichnet, dass** der Stützkörper (13) durch eine Feder (14) im Einbauraum (10, 11) abgestützt ist.

3. Gleitringdichtung nach Anspruch 2, **dadurch gekennzeichnet, dass** die Feder (14) als Schraubendruckfeder ausgebildet ist.

4. Gleitringdichtung nach einem der Ansprüche 1 bis 3, **dadurch gekennzeichnet, dass** der Stützkörper (13) separat erzeugt ist und aus einem zähharten Werkstoff besteht.

## Claims

1. A mechanical face seal, comprising a counter-ring (1) and an adjusting ring (2) designed as an abutment, which are connected to each other in a relatively unrotatable manner and enclose in a relatively unrotatable manner a shaft (3) to be sealed and are sealed with respect to each other and with respect to the shaft (3) by in each case at least one sealing ring (4) of elastomeric material, and comprising a face-seal ring (5), which is connected to a housing (6) in a relatively unrotatable and axially resilient manner and is sealed with respect to the housing by at least one O-ring (7), the counter-ring (1) and the face-seal ring (5) having sealing surfaces (8, 9) which contact each other in a sealing manner under elastic prestress and the sealing ring (4) and the O-ring (7) being arranged in a sealing manner under elastic prestress in a respective installation space (10, 11), formed by the counter-ring (1) and the adjusting ring (2) and by the face-seal ring (5) and the housing (6), essentially the entire surface of at least the O-ring (7) being contacted in a bearing manner under elastic prestress by the bounding walls of the respective installation space (11) and a supporting surface (12) of at least one supporting body (13) arranged in the respective installation space (11), **characterized in that** the supporting body (13) has on the side facing the O-ring (7) a congruently shaped surface form adapted to the shape of the O-ring (7).

2. A mechanical face seal according to claim 1, **characterized in that** the supporting body (13) is supported by a spring (14) in the installation space (10, 11).

3. A mechanical face seal according to claim 2, **characterized in that** the spring (14) is designed as a helical compression spring.

4. A mechanical face seal according to any one of claims 1 to 3, **characterized in that** the supporting body (13) is separately produced and consists of a tough material.

## Revendications

1. Garniture mécanique d'étanchéité comprenant une contre-bague (1) et une bague d'arrêt (2) exécutée en tant que butée qui sont reliées l'une à l'autre d'une manière ne permettant pas de torsion relative et entourent un arbre (3) à rendre étanche d'une manière ne permettant pas de torsion relative, et qui sont rendues étanches l'une par rapport à l'autre et par rapport à l'arbre (3) au moyen, à chaque fois, d'au moins une bague d'étanchéité (4) en matière élastomère, et comprenant un anneau de glissement (5) qui est relié à un boîtier (6) de façon à faire ressort dans la direction axiale et ne permettant pas de torsion relative et est rendu étanche par rapport à celui-ci grâce à au moins un joint torique d'étanchéité (7), la contre-bague (1) et l'anneau de glissement (5) étant pourvus de surfaces d'étanchéité (8, 9) qui sont en contact étanche l'une avec l'autre sous l'effet d'une précontrainte élastique, et la bague d'étanchéité (4) et le joint torique d'étanchéité (7) étant disposés de manière étanche, sous l'effet d'une précontrainte élastique, dans un espace de montage (10, 11) respectif formé par la contre-bague (1) et la bague d'arrêt (2) ainsi que par l'anneau de glissement (5) et le boîtier (6), dans laquelle essentiellement la totalité de la surface du joint torique d'étanchéité (7) au moins est contactée étroitement, sous l'effet d'une précontrainte élastique, par les parois de limitation de l'espace de montage (11) respectif et par une surface d'appui (12) d'au moins un corps d'appui (13) situé dans l'espace de montage (11) respectif, **caractérisée en ce que** le corps d'appui (13) est pourvu, sur le côté tourné vers le joint torique d'étanchéité (7), d'une surface de forme congruente adaptée à la forme du joint torique d'étanchéité (7).

2. Garniture mécanique d'étanchéité selon la revendication 1, **caractérisée en ce que** le corps d'appui (13) est supporté par un ressort (14) dans l'espace de montage (10, 11).

3. Garniture mécanique d'étanchéité selon la revendication 2, **caractérisée en ce que** le ressort (14) est exécuté en tant que ressort de compression.

4. Garniture mécanique d'étanchéité selon l'une des revendications 1 à 3, **caractérisée en ce que** le corps d'appui (13) est fabriqué séparément et est formé d'un matériau incassable.
